# EUROPEAN PATENT APPLICATION

(11) **EP 1 983 751 A2**
(43) Date of publication of application: **22.10.2008**
(21) Application number: 08006998.2
(22) Date of filing: 08.04.2008
(51) Int. Cl.: H04N 7/14

(54) **Control apparatus, mobile communications system, and communications terminal**

(30) Priority: 16.04.2007 JP 2007107395
(71) Applicant: NTT DoCoMo, Inc., Chiyoda-ku Tokyo 100-6150 (JP)
(72) Inventor: Kano, Izua c/o Intellectual Property Department, Chiyoda-ku Tokyo 100-6150 (JP); Yamada, Eiju c/o Intellectual Property Department, Chiyoda-ku Tokyo 100-6150 (JP); Yamada, Kazuhiro c/o Intellectual Property Department, Chiyoda-ku Tokyo 100-6150 (JP); Onda, Yasushi c/o Intellectual Property Department, Chiyoda-ku Tokyo 100-6150 (JP); Kamiya, Dai c/o Intellectual Property Department, Chiyoda-ku Tokyo 100-6150 (JP); Murakami, Keiichi c/o Intellectual Property Department, Chiyoda-ku Tokyo 100-6150 (JP)
(74) Representative: HOFFMANN EITLE

(57) **Abstract**

There is provided a control apparatus comprising: a receiving unit that, from one of a first communications terminal and a second communications terminal, each of the communications terminals being capable of sending and receiving images and messages and of displaying messages and images, receives a notification indicating detection of an outside party who is not a communicant with either of the communications terminals; and a control unit that, when the receiving unit does not receive the notification from the first communications terminal, causes the first communications terminal to display a captured image sent by the second communications terminal, and when the receiving unit receives the notification from the first communications terminal, causes the first communications terminal to display a substitute image for display in place of the captured image.

## Description

### BACKGROUND

### Technical Field

The present invention relates to technology for communicating between users by sending/receiving a text or voice message along with an image.

### Related Art

In portable telephones, along with increased functionality in recent years, communication by not only voice has become possible. For example, portable telephones have become widespread that have a so-called videophone function in which an image of a speaker's face or the like that is captured with an attached camera is sent/received along with voice. Also known are portable telephones in which an image of a predetermined character or the like is displayed during a voice telephone call (for example, see JP 2004-537231A and JP 2004-297350A).

Incidentally, when communication is performed using a videophone function, there is a possibility that the telephone caller's face or the like will be known not only to the other party to the telephone call, but also to a person nearby that other party. Thus, there is a risk that privacy cannot be adequately protected with only a conventional videophone function. On the other hand, as in JP 2004-537231A and JP 2004-297350A, because a feeling of closeness between the speakers is not enhanced by merely continuing to display an image such as a character during the telephone call, there is a fear that communication will not particularly be encouraged.

### SUMMARY

The present invention was made in view of these circumstances, and it is an object thereof to promote communication between speakers while restricting the use of images in which a speaker is captured.

According to an aspect of the invention, there is provided a control apparatus including: a receiving unit that, from one of a first communications terminal and a second communications terminal, each of the communications terminals being capable of sending and receiving images and messages and of displaying messages and images, receives a notification indicating detection of an outside party who is not a communicant with either of the communications terminals; and a control unit that, when the receiving unit does not receive the notification from the first communications terminal, causes the first communications terminal to display a captured image sent by the second communications terminal, and when the receiving unit receives the notification from the first communications terminal, causes the first communications terminal to display a substitute image for display in place of the captured image.

According to another aspect of the invention, each of the first communications terminal and the second communications terminal stores the substitute image; and the control unit, when displaying a captured image on the first communications terminal, causes the second communications terminal to send a captured image obtained by the second communications terminal together with a message to the first communications terminal, or when displaying a substitute image on the first communications terminal, causes the second communications terminal to send the substitute image stored in the second communications terminal with a message to the first communications terminal.

According to yet another aspect of the invention, each of the first communications terminal and the second communications terminal stores a plurality of substitute images for display in place of a captured image; and the control unit, when displaying a captured image on the first communications terminal, causes the second communications terminal to send a captured image obtained by the second communications terminal together with a message, or when displaying a substitute image on the first communications terminal, the control unit notifies the first communications terminal of a substitute image designated by the second communications terminal, and then causes the first communications terminal to display the notified substitute image.

According to yet another aspect of the invention, the control apparatus further includes a storage unit that stores the substitute image, wherein the control unit, when displaying a captured image on the first communications terminal, causes the second communications terminal to send a captured image obtained by the second communications terminal together with a message, or when displaying the substitute image on the first communications terminal, the control unit sends the substitute image stored in the storage unit.

According to yet another aspect of the invention, the storage unit further stores identifiers of the first communications terminal and second communications terminal and respective substitute images; and the control unit, when displaying a substitute image on the first communications terminal, extracts from the storage unit a substitute image stored in association with the identifier of the second communications terminal, and sends the extracted substitute image to the first communications terminal.

According to yet another aspect of the invention, there is provided a mobile communications system including: a receiving apparatus that, from one of a first communications terminal and a second communications terminal, each of the communications terminals being capable of sending and receiving images and messages and of displaying messages and images, receives a notification indicating detection of an outside party who is not a communicant with either of the communications terminals; and a control apparatus that, when the receiving unit does not receive the notification from the first communications terminal, causes the first communications terminal to display a captured image sent by the second communications terminal, and when the receiving unit receives the notification from the first communications terminal, causes the first communications terminal to display a substitute image for display in place of the captured image.

According to yet another aspect of the invention, there is provided a communications terminal including: a capture unit; a storage unit that stores a substitute image for display in place of a captured image; a send/receive unit that sends and receives images and messages to and from a correspondent terminal; a display that displays an image received by the send/receive unit, a detection unit that detects within a predetermined range of the correspondent terminal an outside party who is not a communicant with the correspondent terminal; and a send unit that sends to a control apparatus a notification indicating the detection of the outside party.

According to yet another aspect of the invention, the detection unit includes at least any one of a heat sensor that detects the outside party who is not a communicant with the correspondent terminal by sensing heat emitted from the outside party, a voice analyzer that analyzes voices to identify voices of person involved in a communication and a voice of the outside party, and an image recognition unit that identifies the outside party based on a captured image.

In an aspect of the invention, when a person other than the speaker of one communications terminal is not detected, a captured image sent from the other communications terminal is displayed on the one communications terminal, so the speaker can communicate while viewing a captured image of the other party. When a person other than the speaker of one communications terminal has been detected, a substitute image is displayed instead of the captured image on the one communications terminal, so it is possible to restrict the use of a captured image of the speaker of the other communications terminal.

### BRIEF DESCRIPTION OF THE DRAWINGS

Exemplary embodiments of the present invention will be described in detail based on the following figures, wherein:
FIG. 1 shows the overall configuration of a system that is an exemplary embodiment of the invention;
FIG. 2 is a block diagram that shows the configuration of a control apparatus;
FIG. 3 shows the configuration of an avatar ID conversion table stored by the control apparatus;
FIG. 4 shows the configuration of a distance management table stored by the control apparatus;
FIGS. 5A and 5B show a detection area of a detection unit;
FIG. 6 shows an operator provided by a mobile communications terminal;
FIG. 7 shows the logical configuration of units realized in the mobile communications terminal;
FIG. 8A shows an example of an avatar image, and FIG. 8B shows an example of a photographed image;
FIG. 9 is a flowchart that shows processing executed by the mobile communications terminal;
FIG. 10 shows an example of an image displayed by the mobile communications terminal;
FIG. 11 shows an example of an image displayed by the mobile communications terminal;
FIG. 12 is a sequence chart that shows processing executed by the mobile communications terminal and the control apparatus; and
FIG. 13 is a sequence chart that shows processing executed by the mobile communications terminal and the control apparatus.

### DETAILED DESCRIPTION

Following is a description of an exemplary embodiment of the invention, with reference to the drawings.

In the description below, a voice telephone call that accompanies an image is referred to as a "videophone call". The term "image" encompasses the meaning of both a still image and a moving image. "Captured image" means an image obtained by capturing; for example, an image of a user's face that has been captured with a camera attached to a communications terminal is typical. An "avatar" symbolically represents the user of a communications terminal. An avatar is used comparatively often in bidirectional communication, such as for example, chat or bulletin boards on the Internet. An "avatar image" is an image that represents an avatar, and encompasses, for example, other than an image simulating the face or figure of a person, an image of an animal, a robot, an imaginary life form, or the like.

In this exemplary embodiment, detection is performed of whether or not a person other than a speaker is present near each of the two communications terminals that perform a videophone call. When a person other than the speaker is not detected, only that speaker is viewing the display of the communications terminal, so by displaying a captured image of the other party to the call on that display, communication by both parties is promoted. On the other hand, when a person other than a speaker is detected, there is a possibility that other than that speaker, a third party also will view the display of the communications terminal, so an avatar image is displayed on that display instead of a captured image of the other party. Thus, it is possible to protect the privacy of the other party to a call.

### Configuration

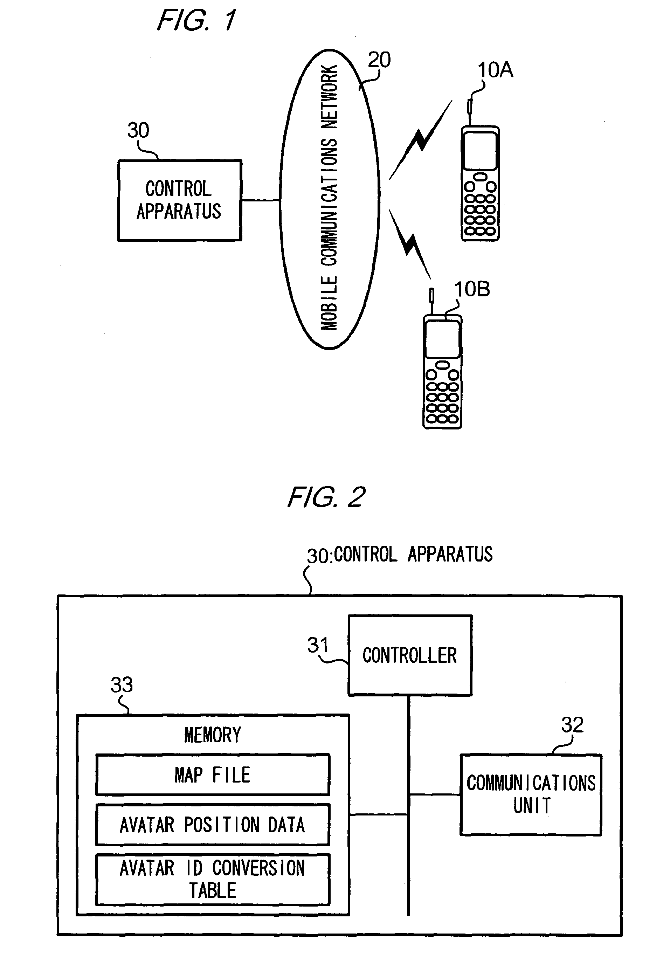

FIG. 1 schematically shows the overall configuration of a system that is an exemplary embodiment of the invention. As shown in FIG. 1, this system is provided with mobile communications terminals 10A and 10B, a mobile communications network 20, and a control apparatus 30. Although multiple mobile communications terminals exist in this system, in FIG. 1, only a communications source mobile communications terminal and a communications destination mobile communications terminal are shown. Below, the mobile communications terminal 10A serves as the communications source mobile communications terminal and the mobile communications terminal 10B serves as the communications destination mobile communications terminal, but when it is not necessary to distinguish between the mobile communications terminals 10A and 10B, they are referred to together as a "mobile communications terminal 10".

The mobile communications network 20 is a network system for providing a mobile communications service to the mobile communications terminal 10, and is managed by a communications business referred to as a carrier. The mobile communications network 20 is provided with nodes such as a base station, a switching station, and a service control station, and communications lines (not shown in the figure) that form a connection between these nodes. The mobile communications network 20 multiplexes and transmits, in compliance with a predetermined protocol, voice data, image data, control data, and the like. It is suitable that the mobile communications network 20 is compliant with a protocol such as, for example, 3G-324M standardized by the 3GPP (3rd Generation Partnership Project). The service control station stores position registration information of the mobile communications terminal 10, information related to a contract or billing of a user of the mobile communications terminal 10, a telephone number for each mobile communications terminal 10, and the like. The control apparatus 30 is connected to the service control station of the mobile communications network 20.

FIG. 2 is a block diagram that shows the configuration of the control apparatus 30. As shown in FIG. 2, the control apparatus 30 is provided with a controller 31, a memory 33, and a communications unit 32. The controller 31 is provided with a CPU (Central Processing Unit), a ROM (Read Only Memory), a RAM (Random Access Memory), and the like, and controls operation of each part of the control apparatus 30 by the CPU executing a program stored in the ROM or the memory 33, using the RAM as a work area. The memory 33 is provided with a storage apparatus such as an HDD (Hard Disk Drive). The memory 33 stores, in addition to the program executed by the controller 31, various data for realizing communications between mobile communications terminals 10. The communications unit 32 is an interface apparatus for performing communications via the mobile communications network 20.

Here, the data stored by the memory 33 will be described.

The memory 33 stores a map file, position data of multiple avatars, an avatar ID conversion table, and also various data for performing processing of avatar image data and the like described later. The map file is a collection of data that represents a virtual three-dimensional space (referred to below as a "virtual space"), and includes object data, position information, and path information. The object data is data that represents objects such as buildings or roads that constitute the virtual space. The object data is data that defines the shape and color, i.e. the external appearance, of each object, and is so-called polygon data. The objects of the object data are only static objects, i.e. objects whose position in the virtual space is fixed, and do not include moving objects such as avatars. The position information indicates a position in the virtual space based on a two-dimensional or three-dimensional coordinate system. Each object represented by the object data is associated with position information. The path information is data that defines a location in the virtual space that can become a path of an avatar. For example, a road or the like corresponds to a location defined in the path information.

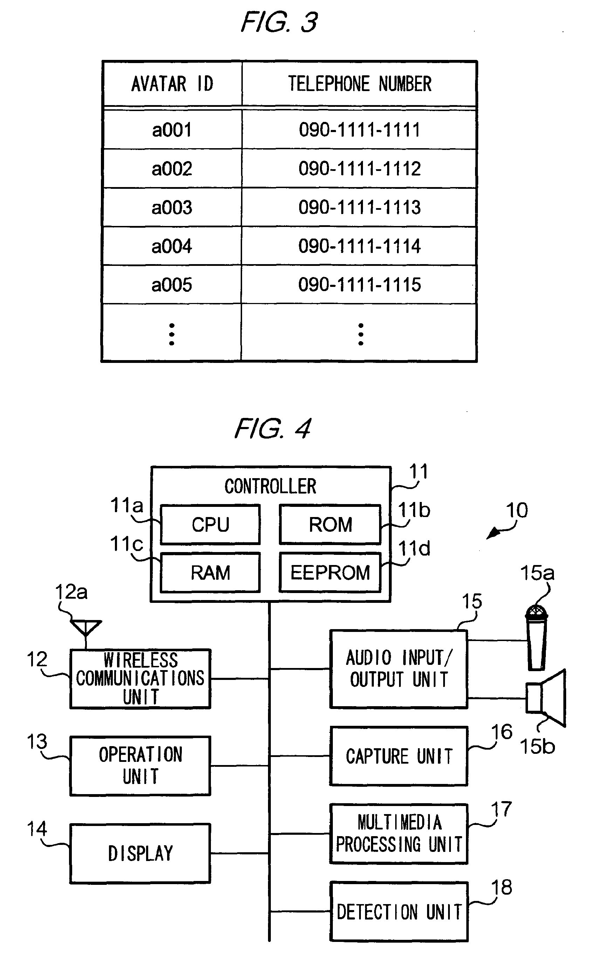

Avatar position data sent from each of multiple mobile communication terminals 10 to the control apparatus 30 is stored in the avatar position data. As shown in FIG. 3, the avatar ID conversion table includes an avatar ID allocated to each avatar, and a telephone number of the mobile communications terminal 10 that corresponds to that avatar, the avatar ID and the telephone number being associated with each other.

Next is a description of the mobile communications terminal 10. The mobile communications terminal 10 is a mobile communications terminal capable of communications with another mobile communications terminal 10 via the mobile communications network 20, and is a so-called portable telephone. The mobile communications terminal 10 has a videophone function, and is configured to be capable of displaying a received image while sending/receiving images and voice messages to/from the mobile communications terminal of the other party to a call. Further, the mobile communications terminal 10 is configured to be capable of communicating with the other user via another avatar in the virtual space by displaying the virtual space provided by the control apparatus 30, and moving an avatar that represents the user in the virtual space.

FIG. 4 is a block diagram that shows the configuration of the mobile communications terminal 10.

As shown in FIG. 4, the mobile communications terminal 10 is provided with a controller 11, a wireless communications unit 12, an operation unit 13, a display 14, an audio input/output unit 15, a capture unit 16, a multimedia processing unit 17, and a detection unit 18. The controller 11 is provided with a CPU 11a, a ROM 11b, a RAM 11c, and an EEPROM (Electronically Erasable and Programmable ROM) 11d. The controller 11 controls operation of each part of the mobile communications terminal 10 by the CPU 11a executing a program stored in the ROM 11b or the EEPROM 11d, using the RAM 11c as a work area. The wireless communications unit 12 is provided with an antenna 12a, and wirelessly sends/receives data to/from the mobile communications network 20. The operation unit 13 is provided with operators such as buttons, and supplies an operation signal corresponding to operation by the user to the controller 11. The display 14 is a display apparatus provided with a liquid crystal panel and a liquid crystal driving circuit, and displays various information according to an instruction from the controller 11. The audio input/output unit 15 is provided with a microphone 15a and a speaker 15b, and inputs/outputs a voice signal. The capture unit 16 has the function of a so-called camera. The capture unit 16 is provided with a CMOS (Complementary Metal Oxide Semiconductor) image sensor and a signal processing circuit, and produces image data that represents a photographic subject that has been captured.

The multimedia processing unit 17 is provided with an LSI (Large Scale Integration) integrated circuit for processing data sent/received via the wireless communications unit 12, and executes encoding/decoding processing, multiplex processing, separation processing, and the like of voice and images. The multimedia processing unit 17 produces moving image data based on the image data produced by the capture unit 16. Below, this moving image data is referred to as "captured image data". AMR (Adaptive Multi-Rate) compression may be used for encoding/decoding of voice signals, and MPEG (Moving Picture Experts Group) -4 compression may be used for encoding/decoding of image data.

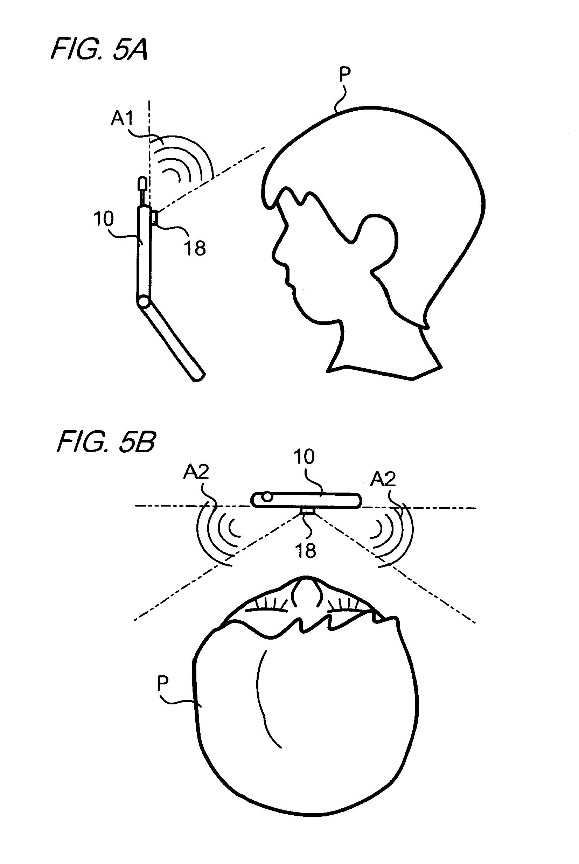

The detection unit 18 is a unit that detects whether or not a person other than the speaker of a mobile communications terminal 10 is present within a predetermined range (within several meters, for example) from that mobile communications terminal 10. For example, the detection unit 18 is a heat sensor, whose detection face is facing a direction other than the direction of the speaker, who is looking at the display from the front. Here, FIGS. 5A and 5B show a detection area A1 of the detection unit 18 employing a heat sensor. In FIG. 5A, the detection area A1 of the detection unit 18 when viewed from the horizontal direction is indicated with a diagonal line, and in FIG. 5B, detection directions of the detection unit 18 when viewed from above in the vertical direction are indicated with diagonal lines. As shown in FIGS. 5A and 5B, the detection direction of the detection unit 18 is a direction other than the direction of a speaker P, who looks at the display 14 of the mobile communications terminal 10 from the front of the display 14. The distance of that detection is about several meters. Accordingly, when the detection unit 18 has detected heat of approximately the body temperature of a person, this means that a person other than the speaker is present nearby the mobile communications terminal 10.

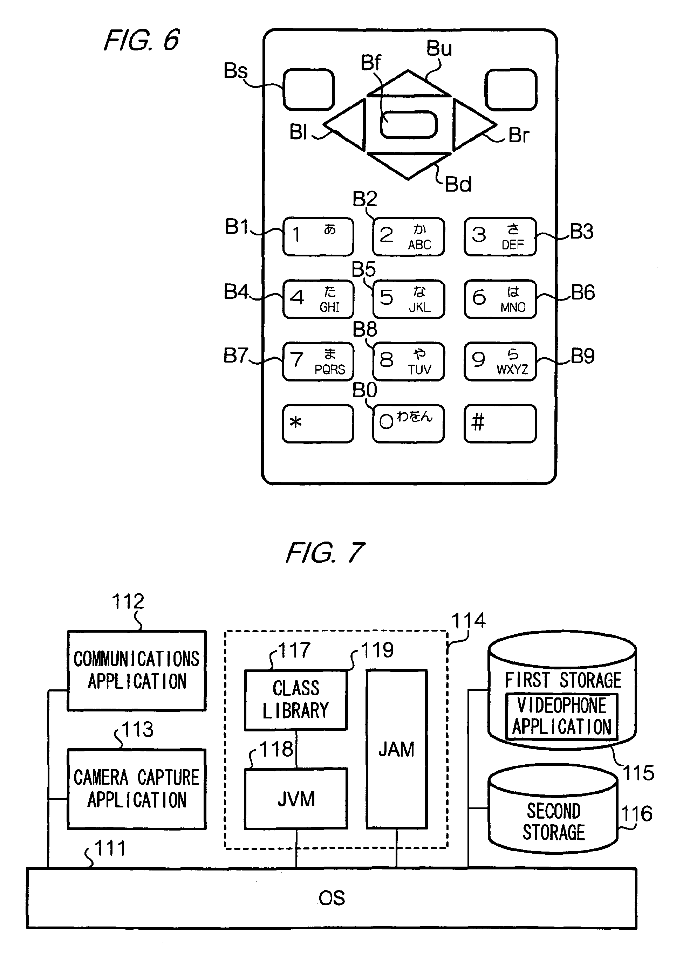

Here, the operators provided in the operation unit 13 will be described with reference to FIG. 6. As shown in FIG. 6, the operation unit 13 is provided with a function button Bs, movement buttons Bu, Bd, B1, and Br, a confirmation button Bf, and dial buttons B1 to B0. A predetermined function according to the screen display of the display 14 is assigned to the function button Bs. The function assigned to the function button Bs is a function for selecting a communications destination, and the details of that function will be described later. The movement buttons Bu, Bd, Bl, and Br are buttons for moving an object intended for movement (an avatar or a pointer) to the front, rear, left, or right (or up, down, left, or right). The confirmation button Bf is a button for selecting an object displayed on the display **14,** and confirming the contents of processing thereafter. The dial buttons B1 to B0 are buttons for inputting text or numerals.

Next is a description of the contents of data stored by the mobile communications terminal 10. The ROM 11b stores several programs in advance. Below, these are referred to as "preinstalled programs". Specifically, the preinstalled programs are each of a multi-tasking operating system (referred to below as a "multi-tasking OS"), a Java (registered trademark) platform program, and native applications. As a general description of these programs, first, the multi-tasking OS is an operating system that supports various functions necessary for executing simulated parallel execution of multiple tasks with a TSS (Time-Sharing System), such as allocation to virtual memory spaces. The Java platform program is a group of programs written according to a CDC (Connected Device Configuration), which is a configuration for realizing a Java runtime environment 114, described later, in a portable telephone equipped with the multi-tasking OS. The native applications are programs that realize basic services of the mobile communications terminal 10, such as telephone calls, communications, image capture using the camera, and the like.

The EEPROM 11d has a Java application storage area in which Java applications are stored. A Java application has a Jar (Java Archive) file in which an actual program that describes a processing procedure under the Java runtime environment 114, and image files and audio files used when executing the actual program, are collected, and an ADF (Application Descriptor File) that describes installation, startup, and various attributes of that Jar file. This Java application is created by a content provider or a communications business, is stored on a server apparatus connected to the Internet, the mobile communications network 20, or the like, and is appropriately downloaded from a control apparatus thereof in response to a request from the mobile communications terminal 10.

FIG. 7 shows the logical configuration of units realized in the controller 11 of the mobile communications terminal 10 by execution of the various programs of the ROM 11b and the EEPROM 11d. As shown in FIG. 7, in the mobile communications terminal 10 that executes the various programs, a communications application 112, a camera capture application 113, and the Java runtime environment 114 are realized on an OS 111, and a first storage 115 and a second storage 116 are secured in the EEPROM 11d. The communications application 112 and the camera capture application 113 are realized by native applications of the ROM 11b, and respectively realize establishment of communications with the mobile communications network 20 and image capture by the capture unit 16.

The Java runtime environment 114 is realized by the Java platform of the ROM 11b. The Java runtime environment 114 includes a class library 117, a JVM (Java Virtual Machine) 118, and a JAM (Java Application Manager) 119. In the class library 117, a group of program modules (classes) that have specific functions are collected in one file. The JVM 118 is a Java runtime environment optimized for the above CDC, and has a function to interpret and execute byte code provided as a Java application. The JAM 119 has a function to manage downloading, installation, startup, and ending of Java applications. The first storage 115 is an area where Java applications (Jar files and ADFs) downloaded under management by the JAM 119 are stored. The second storage 116 is an area where data generated when executing a Java application is stored after ending that Java application, and in which a separate storage area is assigned to each installed Java application. While a particular Java application is being executed, only data of the storage area assigned to that Java application can be rewritten; rewriting by other Java applications is not possible.

Included among the Java applications is an application for performing display in the virtual space according to movement of an avatar, and performing calls and communications with another mobile communications terminal 10 according to user instructions. This application is referred to below as a "videophone application". This videophone application is stored in advance in the mobile communications terminal 10. Also, included in the EEPROM 11d is "avatar image data" that represents an avatar necessary when executing the videophone application.

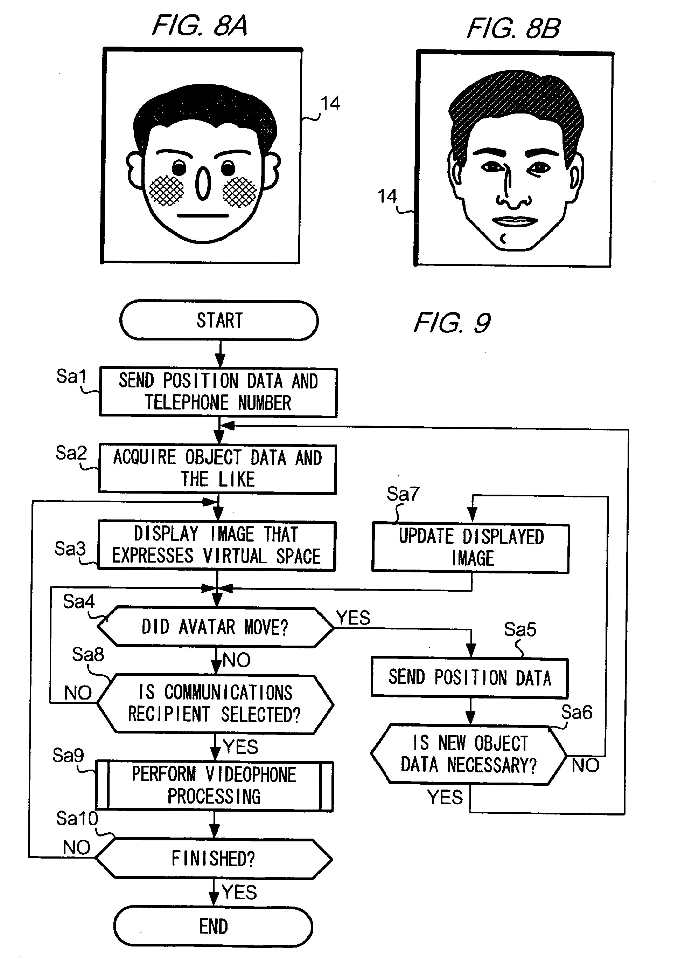

When performing a videophone call using the avatar image data, the controller 11 reads out the avatar image data from the EEPROM 11d, and sends that avatar image data to the mobile communications network 20 along with a voice message that has been input to the audio input/output unit 15. The mobile communication network 20 sends the avatar image data and the voice message to the mobile communications terminal 10 of the communications destination. In the mobile communications terminal 10 of the communications destination, the controller 11, based on the avatar image data received by the wireless communications unit 12, displays an avatar image on the display 14, and outputs the received voice message from the audio input/output unit 15. FIG. 8A shows an example in which an avatar image represented by the avatar image data is displayed on the display 14 of the mobile communications terminal 10 of the communications destination.

On the other hand, when performing a videophone call using captured image data, the controller 11 sends the captured image data obtained by capturing by the capture unit 16 to the mobile communications network 20 along with a voice message that has been input to the audio input/output unit 15. The mobile communication network 20 sends the captured image data and the voice message to the mobile communications terminal 10 of the communications destination. In the mobile communications terminal 10 of the communications destination, the controller 11, based on the captured image data received by the wireless communications unit 12, displays a captured image on the display 14, and outputs the received voice message from the audio input/output unit 15. FIG. 8B shows an example in which the face of the user of the mobile communications terminal 10 that has been captured by the capture unit 16 is displayed on the display 14 of the mobile communications terminal 10 of the communications destination.

### Operation

Next is a description of operation of the mobile communications terminal 10 and the control apparatus 30 in the mobile communications system with the above configuration. Here, first is a description of processing that is executed when the mobile communications terminal 10 starts up the videophone application described above, followed by a description of processing respectively executed by the mobile communications terminals 10A and 10B, and the control apparatus 30, when a voice telephone call is performed between the mobile communications terminal 10A and the mobile communications terminal 10B. In the below description, a circumstance is assumed in which the videophone application is executed by multiple mobile communications terminals 10, including the mobile communications terminal 10B, and multiple avatars exist in the virtual space.

FIG. 9 is a flowchart that shows processing executed when the mobile communications terminal 10A starts up the videophone application. When a predetermined operation by a user causes the videophone application to be started up, the controller 11 of the mobile communications terminal 10A sends position data that indicates a predetermined position in the virtual space and data that represents the telephone number of that terminal to the control apparatus 30 (Step Sa1). The position indicated by this position data is a position as desired, and for example, may be a position that has been determined in advance, or may be the position of an avatar when execution of the videophone application was previously ended.

In the control apparatus 30, after receiving the position data, the controller 31 acquires this position data, refers to the map file stored in the memory 33, and designates object data according to the acquired position data. Specifically, the controller 31 designates object data in a predetermined range from the position indicated by the acquired position data. After object data has been designated in this manner, the controller 31 sends this object data, and position data of respective object data, to the mobile communications terminal 10A. At this time, when an avatar of another user exists in the aforementioned predetermined range, the controller 31 sends, together as avatar-related information, an avatar ID assigned to that avatar, position data that indicates the position of that avatar, and avatar image data that represents that avatar. The controller 11 of the mobile communications terminal 10A acquires the object data and the avatar-related information from the control apparatus 30 (Step Sa2), and based on the acquired object data and avatar-related information, displays an image that represents the virtual space on the display 14 (Step Sa3).

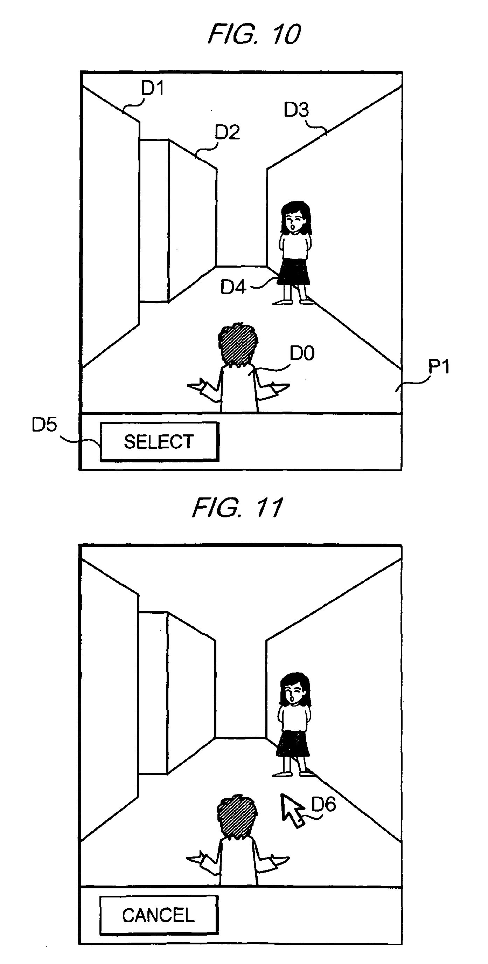

FIG. 10 shows an example of an image displayed by the display 14 at this time. In FIG. 10, an image D0 is an avatar image that represents the user of the mobile communications terminal 10A, and moves in the virtual space according to operation by the user of the mobile communications terminal 10A. Also, images D1, D2, and D3 represent buildings, and an area P1 sandwiched by the images D1, D2, and D3 represents a road. An image D4 is an avatar image that represents the user of the mobile communications terminal 10B, not the mobile communications terminal 10A, and moves in the virtual space according to operation by the user of the mobile communications terminal 10B. An image D5 is an image that indicates a function assigned to the function button Bs.

When, in this state, the user depresses the movement button Bu, Bd, B1, or Br, the controller 11 changes the display of the display 14 such that the position of the avatar in the virtual space changes. For example, when, in the state shown in FIG. 10, the user depresses the movement button Bu, the controller 11 updates the display contents of the display 14 to a screen in which the display position of the images D1, D2, D3, and D4, displayed based on the object data, has been changed. Thus the avatar of the image D0 appears to be moving forward.

When, in this state, the user depresses the function button Bs, the controller 11 displays a pointer on the display 14. With this pointer, it is possible for the user to select an avatar image that corresponds to the communications destination. When, in a state in which the pointer has been displayed, the user depresses the function button Bs, the controller 11 hides the pointer, establishing a state in which it is again possible to move the avatar in the virtual space. FIG. 11 shows an example of an image when the display 14 is displaying the pointer. In FIG. 11, an arrow-like image D6 represents the pointer. When, in a state in which the pointer has been displayed in this manner, the user depresses the movement button Bu, Bd, Bl, or Br, the controller 11 changes the display of the display 14 such that the position of the pointer changes. That is, when the pointer is not being displayed, the movement buttons Bu, Bd, Bl, and Br function as operators for moving the avatar, and when the pointer is being displayed, they function as operators for moving the pointer. When the confirmation button Bf is depressed in a state in which the pointer is overlapping with an avatar image that corresponds to a desired communications destination, the controller 11 sends a request to the control apparatus 30 to perform a videophone call with the communications destination that corresponds to this avatar.

The above operation will be described following the flowchart in FIG. 9. After the image display in Step Sa3 is performed, the controller 11 judges whether or not avatar movement is being instructed by the user (Step Sa4). Specifically, the controller 11 repeatedly judges whether or not an operation signal corresponding to the operation button Bu, Bd, Bl, or Br has been supplied. If movement of the avatar has been instructed by the user (Step Sa4: yes), the controller 11 sends position data that indicates the position of the avatar to the control apparatus 30 (Step Sa5), and judges whether or not new object data other than the object data already acquired is necessary (Step Sa6). If new object data is not necessary (Step Sa6: no), the controller 11 updates the display position of the image displayed based on the object data in order to show the avatar such that the avatar has moved position (Step Sa7), and processing again returns to Step Sa4. If new object data is necessary (Step Sa6: yes), the controller 11 again acquires object data corresponding to the position data or the like from the control apparatus 30 (Step Sa2).

The controller 11 repeats the above processing while the user is moving the avatar. On the other hand, when movement of the avatar is not instructed by the user (Step Sa4: no), the controller 11 judges whether or not a communications destination has been selected by the user (Step Sa8). Specifically, the controller 11 judges whether or not an operation signal corresponding to the confirmation button Bf in a state in which the avatar image and the pointer are overlapping has been supplied. If a communications destination has not been selected by the user (Step Sa8: no), the controller 11 again returns to the processing in Step Sa4. On the other hand, if a communications destination has been selected (Step Sa8: yes), the controller 11 executes processing in order to perform a videophone call (Step Sa9). This processing (referred to below as "videophone processing") will be described later. Afterward, the controller 11 judges whether or not the videophone application has been ended by the user (Step Sa10), and if the user has instructed to end the videophone application (Step Sa10: yes), the videophone application is ended, and if the user has not instructed to end the videophone application (Step Sa10: no), the controller 11 again displays the image representing the virtual space on the display 14, and repeats the processing from Step Sa3 onward.

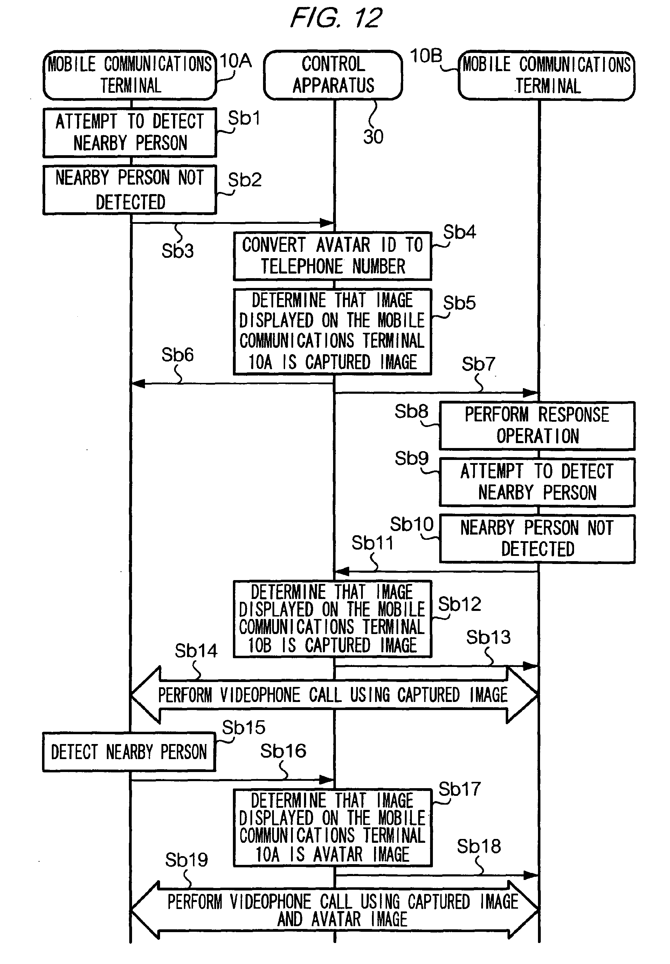

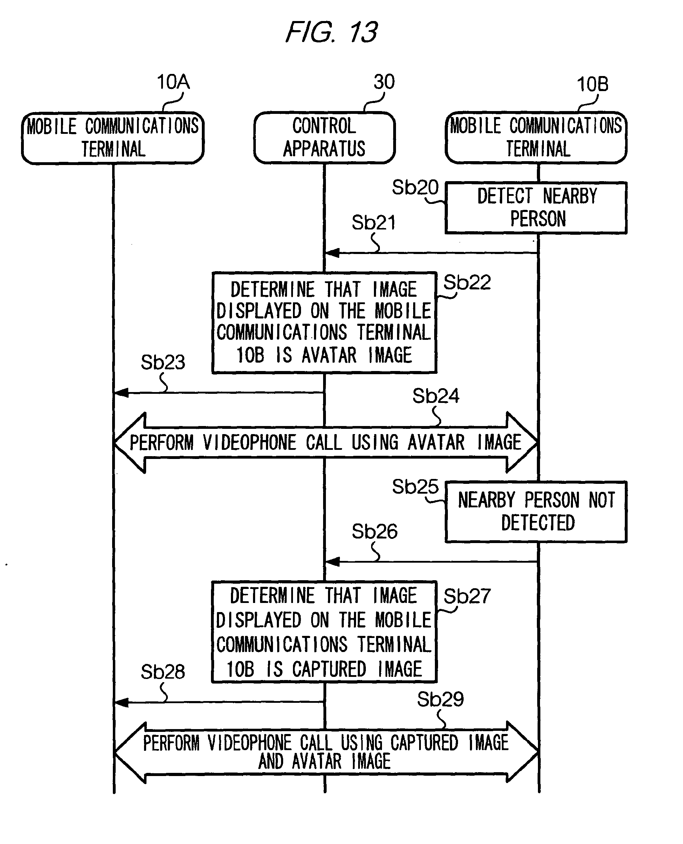

Next is a description of the videophone processing in Step Sa9. This processing will be described along with processing in the control apparatus 30 and the mobile communications terminal 10B of the communications destination. FIGS. 12 and 13 are sequence charts that show a sequence of processing executed at this time by the mobile communications terminals 10A and 10B and the control apparatus 30. Below is a description of operation of the mobile communications terminals 10A and 10B and the control apparatus 30, following FIGS. 12 and 13.

In FIG. 12, first, the controller 11 of the mobile communications terminal 10A, with the detection unit 18, attempts to detect a person present nearby the mobile communications terminal 10A (Step Sb1). Here, it is assumed that a nearby person could not be detected (Step Sb2). Next, the controller 11 sends a request to perform a videophone call to the control apparatus 30 (Step Sb3). Included in this request are the telephone number of the mobile communications terminal 10A, an avatar ID of the avatar designated as the communications destination by the pointer D6, and the fact that a nearby person could not be detected. The controller 31 of the control apparatus 30, when this request is received via the communications unit 32, converts the avatar ID included in this request to a telephone number according to the avatar ID conversion table stored in the memory 33 (Step Sb4). Also, because the fact that a nearby person could not be detected is included in the above request, the controller 31 determines that the image displayed on the mobile communications terminal 10A when performing a videophone call will be a captured image (Step Sb5).

Next, the controller 31 sends an instruction to the mobile communications terminal 10A designating the captured image data as the image data to be sent to the mobile communications terminal of the other party by the mobile communications terminal 10A (Step Sb6). In parallel with Step Sb6, the controller 31 instructs each node such as the service control station of the mobile communications network 20, thus placing a call to the mobile communications terminal 10B (Step Sb7). In the mobile communications terminal 10B that has received the call from the control apparatus 30, the user (speaker) depresses an off hook key to perform an operation of responding to the incoming call (Step Sb8). In response to this operation, the controller 11 of the mobile communications terminal 10B, with the detection unit 18, attempts to detect a person present nearby (Step Sb9). When a person could not be detected (Step Sb10), the controller 11 notifies the control apparatus 30 that a nearby person could not be detected (Step Sb11). In response to this notification, the controller 31 of the control apparatus 30 determines that the image displayed on the mobile communications terminal 10B when performing the videophone call will be a captured image (Step Sb12). Then, the controller 31 sends an instruction to the mobile communications terminal 10B designating the captured image data as the image data to be sent to the mobile communications terminal of the other party by the mobile communications terminal 10B (Step Sb13).

Afterward, by passing through a predetermined communications procedure, a communications line via the mobile communications network 20 is established between the mobile communications terminal 10A and the mobile communications terminal 10B, and a videophone call using captured images is realized (Step Sb14). That is, the controller 11 of the mobile communications terminal 10A and the mobile communications terminal 10B each send the captured image data obtained by capturing with the capture unit 16, along with a voice message that has been input to the audio input/output unit 15, to the mobile communications network 20. The mobile communication network 20 sends the captured image data and the voice message to the mobile communications terminal 10 of the other party. In the mobile communications terminal 10 of the other party, the controller 11, based on the captured image data received by the wireless communications unit 12, displays a captured image on the display 14, and outputs the received voice message from the audio input/output unit 15. Thus, in both the mobile communications terminal 10A and the mobile communications terminal 10B, the videophone call is performed in a state in which a captured image as shown for example in FIG. 8B is displayed on the display 14.

After the communications line has been established, in the mobile communications terminal 10A and the mobile communications terminal 10B, the controller 11 of each, with the detection unit 18, continuously attempts to detect a person present nearby, and for example in the mobile communications terminal 10A, when a nearby person has been detected (Step Sb15), the controller 11 of the mobile communications terminal 10A notifies the control apparatus 30 of that fact (Step Sb16). In response to this notification, the controller 31 of the control apparatus 30 determines that the image displayed on the mobile communications terminal 10A when performing the videophone call will be an avatar image (Step Sb17). Then, the controller 31 sends an instruction to the mobile communications terminal 10B designating the avatar image data as the image data to be sent to the mobile communications terminal of the other party by the mobile communications terminal 10B (Step Sb18).

Thus, the image data sent from the mobile communications terminal 10B is switched from captured image data to avatar image data, and a videophone call employing captured image data and avatar image data is realized (Step Sb19). That is, the mobile communications terminal 10A, same as above, sends captured image data along with a voice message to the mobile communications network 20, and the controller 11 of the mobile communications terminal 10B reads out avatar image data from the EEPROM 11d, and sends that avatar image data along with a voice message that has been input to the audio input/output unit 15 to the mobile communications network 20. The mobile communication network 20 sends the avatar image data and the voice message to the mobile communications terminal 10A of the other party. In the mobile communications terminal 10, the controller 11, based on the avatar image data received by the wireless communications unit 12, displays an avatar image on the display 14, and outputs the received voice message from the audio input/output unit 15. Thus, the videophone call is performed in a state in which in the mobile communications terminal 10A, an avatar image as shown for example in FIG. 8A is displayed on the display 14, and in the mobile communications terminal 10B, a captured image as shown for example in FIG. 8B is displayed on the display 14.

Afterward, for example in the mobile communications terminal 10B as well, when a nearby person has been detected (Step Sb20), the controller 11 of the mobile communications terminal 10B notifies the control apparatus 30 of that fact (Step Sb21). In response to this notification, the controller 31 of the control apparatus 30 determines that the image displayed on the mobile communications terminal 10B when performing the videophone call will be an avatar image (Step Sb22). Then, the controller 31 sends an instruction to the mobile communications terminal 10A designating the avatar image data as the image data to be sent to the mobile communications terminal of the other party by the mobile communications terminal 10A (Step Sb23). Thus, the image data sent from the mobile communications terminal 10A is switched from captured image data to avatar image data, and a videophone call employing avatar image data is realized (Step Sb24). That is, the controller 11 of the mobile communications terminal 10A reads out avatar image data from the EEPROM 11d, and sends that avatar image data along with a voice message that has been input to the audio input/output unit 15 to the mobile communications network 20. The mobile communication network 20 sends the avatar image data and the voice message to the mobile communications terminal 10B of the other party. In the mobile communications terminal 10B, the controller 11, based on the avatar image data received by the wireless communications unit 12, displays an avatar image on the display 14, and outputs the received voice message from the audio input/output unit 15. Thus, in both the mobile communications terminal 10A and the mobile communications terminal 10B, the videophone call is performed in a state in which an avatar image as shown for example in FIG. 8A is displayed on the display 14.

Further, from this state, for example in the mobile communications terminal 10B, when a nearby person is no longer detected (Step Sb25), the controller 11 of the mobile communications terminal 10B notifies the control apparatus 30 of that fact (Step Sb26). In response to this notification, the controller 31 of the control apparatus 30 determines that the image displayed on the mobile communications terminal 10B when performing the videophone call will be a captured image (Step Sb27). Then, the controller 31 sends an instruction to the mobile communications terminal 10A designating the captured image data as the image data to be sent to the mobile communications terminal of the other party by the mobile communications terminal 10B (Step Sb28). Thus, the image data sent from the mobile communications terminal 10A is switched from avatar image data to captured image data, and a videophone call employing captured image data and avatar image data is realized (Step Sb29). That is, the mobile communications terminal 10B, same as above, sends avatar image data along with a voice message to the mobile communications network 20, and the controller 11 of the mobile communications terminal 10A sends the captured image data obtained by capturing with the capture unit 16, along with a voice message that has been input to the audio input/output unit 15, to the mobile communications network 20. The mobile communication network 20 sends the captured image data and the voice message to the mobile communications terminal 10B of the other party. In the mobile communications terminal 10B, the controller 11, based on the captured image data received by the wireless communications unit 12, displays a captured image on the display 14, and outputs the received voice message from the audio input/output unit 15. Thus, the videophone call is performed in a state in which in the mobile communications terminal 10A, an avatar image as shown for example in FIG. 8A is displayed on the display 14, and in the mobile communications terminal 10B, a captured image as shown for example in FIG. 8B is displayed on the display 14.

In the above example, a person could not be detected nearby the mobile communications terminal 10A or the mobile communications terminal 10B when starting a videophone call, but when a person has been detected nearby either one of the mobile communications terminals 10, with generally the same procedure as above, an avatar image is sent from the other mobile communications terminal 10 to the one mobile communications terminal 10. Also, when a person has been detected nearby both the mobile communications terminal 10A and the mobile communications terminal 10B when starting a videophone call, with generally the same procedure as above, an avatar image is sent from both mobile communications terminals 10 to the other party.

Operation of the mobile communications terminals 10A and 10B and the control apparatus 30 in this exemplary embodiment is as described above. By operating in this manner, the speaker of a mobile communications terminal 10 can freely move in the virtual space via an avatar, and perform a videophone call with another speaker of a mobile communications terminal 10 that operates an avatar. That is, according to this exemplary embodiment, it is possible to perform a videophone call even if the telephone number or the like of the communications destination is not known. Also, only the avatar ID that corresponds to the speaker that is the other party to the call is provided to the mobile communications terminal 10; the telephone number of that other party to call is not provided. Thus, it is possible to prevent, beforehand, a circumstance in which the telephone number is divulged. In addition, according to this exemplary embodiment, a call is placed by a method in which the other party to a conversation is searched for while using an avatar to, in a simulated manner, walk around a virtual space, which is totally different from a conventional videophone call. Thus, videophone calls are provided with a high entertainment value, so it can be expected that use of videophone calls will be encouraged.

Also, in the above exemplary embodiment, a detection is performed of whether or not a person other than a speaker is present nearby either of two communications terminals that perform a videophone call, and according to the results of that detection, the image displayed on the mobile communication terminal 10 is switched. When a person other than a speaker is not detected, only that speaker is viewing the display of the communications terminal, so it is possible to encourage communication of both parties by displaying a captured image of the other party to the call on that display. On the other hand, when a person other than a speaker has been detected, there is a possibility that other than that speaker, a third party also will view the display of the communications terminal, so an avatar image is displayed on that display instead of a captured image of the other party to the call. Thus, it is possible to protect the privacy of the other party to a call.

### Modified Examples

The above exemplary embodiment may also be modified in the following manner. Also, the modified examples below may be combined as appropriate.

### (1) Modified Example 1

The configuration of the detection unit 18 is not limited to the example in the exemplary embodiment; any configuration may be adopted in which the detection unit 18 detects a person other than a speaker of the mobile communications terminal 10. For example, the detection unit 18 may also be a voice discrimination unit that detects voice, and discriminates between voice of a speaker and voice of a person other than that speaker, or the detection unit 18 may be an image recognition unit that identifies a person using image recognition to detect a person other than the speaker.

When using a voice discrimination unit, voice of a speaker is picked up by the microphone 15a and stored in the EEPROM 11d as voice data. The controller 11 analyzes the content of the voice picked up by the microphone 15a and extracts a voice other than the voice stored in the EEPROM 11d. If extraction is possible, a judgment is made that a person other than the speaker is nearby the mobile communications terminal 10, and if extraction is not possible a judgment is made that a person other than the speaker is not nearby the mobile communications terminal 10.

When using an image recognition unit, the face of a speaker is captured with the capture unit 16 and stored in the EEPROM 11d as speaker capture data. The controller 11 identifies images that have been captured by the capture unit 16 of the mobile communications terminal 10, and extracts an image of the face of a person other than the speaker capture data stored in the EEPROM 11d. If extraction is possible, a judgment is made that a person other than the speaker is nearby the mobile communications terminal 10, and if extraction is not possible a judgment is made that a person other than the speaker is not nearby the mobile communications terminal 10.

Also, the detection unit 18 may be configured by combining these various detection units in order to increase detection accuracy.

### (2) Modified Example 2

In the above exemplary embodiment, a configuration is adopted such that the image displayed when performing a videophone call is switched on the side of the mobile communications terminal 10 that is the sending source (communications source), but exemplary embodiments of the invention are certainly not limited to such a configuration.

For example, a configuration may also be adopted in which both avatar image data and captured image data are sent to the send source mobile communications terminal 10, and on the communications apparatus 30 side, according to notification from the mobile communications terminal 10 of whether or not a person other than a speaker is present nearby, either the avatar image data or the captured image data is selected and sent to the send destination (communications destination) mobile communications terminal 10.

Also, a configuration may be adopted in which the control apparatus 30 sends both avatar image data and captured image data to the send destination mobile communications terminal 10, and instructs the send destination mobile communications terminal 10 which image to display. In this case, a configuration may be adopted in which in the send destination mobile communications terminal 10, according to the results of detecting whether or not a person other than the speaker is present nearby the mobile communications terminal 10, from among the received avatar image data and captured image data, display is performed using the appropriate image data.

### (3) Modified Example 3

In the above exemplary embodiment, a configuration is adopted in which the mobile communications terminal 10 stores the avatar image data, but this is not a limitation.

For example, a configuration may be adopted in which the control apparatus 30 stores the avatar image data in advance in the memory 33. In this case, the control apparatus 30 instructs the send source mobile communications terminal 10 to always send the captured image data and the message. The control apparatus 30, as the image data to be sent to the send destination mobile communications terminal 10, selects and sends the captured image data received from the send source mobile communications terminal 10 or the avatar image data stored by the control apparatus 30. In order to realize this configuration, it is necessary that the control apparatus 30 is provided with a configuration that relays data related to a videophone call (such as voice data and image data), and that corresponds to the multimedia processing unit of the mobile communications terminal 10. Also, the controller 31 of the control apparatus 30, when sending the avatar image data to the send destination mobile communications terminal 10, acquires multiplexed voice data and captured image data via the communications unit 32, and separates this data into individual voice data and captured image data. The controller 31 of the control apparatus 30 substitutes the avatar image data read out from the memory 33 for the acquired captured image data, supplies the avatar image data to the communications unit 32 after performing multiplexing processing, and sends the avatar image data to the send destination of the mobile communications terminal 10.

Also, a configuration may be adopted in which the control apparatus 30 stores multiple units of avatar image data, and only designation data that includes an avatar ID that identifies avatar image data is sent from the mobile communications terminal 10. By adopting such a configuration, it is possible to reduce the amount of data that is sent in the send source mobile communications terminal 10. In order to realize this configuration, the control apparatus 30 relays data related to a videophone call, and stores multiple units of avatar image data associated with avatar IDs in the memory 33. When an avatar image is displayed on the send destination mobile communications terminal 10, the send source mobile communications terminal 10 sends the designation data that includes an avatar ID along with the voice message. When the controller 31 of the control apparatus 30 receives the designation data from the send source mobile communications terminal 10, multiplexing processing is performed on the avatar image data corresponding to the avatar ID included in that designation data, then that avatar image data is supplied to the communications unit 32, and sent to the send destination mobile communications terminal 10. On the other hand, a configuration may be adopted in which when a captured image is displayed on the send destination mobile communications terminal 10, the control apparatus 30 instructs to send captured image data and the message to the send source mobile communications terminal 10.

Further, the control apparatus 30 may store multiple units of avatar image data associated with telephone number of each mobile communications terminal 10. When an avatar image is displayed on the send destination mobile communications terminal 10, the send source mobile communications terminal 10 sends its own telephone number and the voice message. The controller 31 of the control apparatus 30 performs multiplexing processing on the avatar image data corresponding to the telephone number of the send source mobile communications terminal 10, then supplies that avatar image data to the communications unit 32, and sends the avatar image data to the send destination mobile communications terminal 10. On the other hand, a configuration may be adopted in which when a captured image is displayed on the send destination mobile communications terminal 10, the control apparatus 30 instructs to send captured image data and the message to the send source mobile communications terminal 10. With this sort of configuration as well, it is possible to reduce the amount of data that is sent in the send source mobile communications terminal 10.

Also, the send destination mobile communications terminal 10 may store multiple units of avatar image data that can be displayed as an avatar image that symbolizes the user of the send source. This avatar image data is stored associated with respective avatar IDs. A configuration may be adopted in which, when displaying an avatar image on the send destination mobile communications terminal 10, the send source mobile communications terminal 10 sends designation data that includes an avatar ID along with the voice message. The control apparatus 30 sends that designation data and the voice message to the send destination mobile communications terminal 10. The send destination mobile communications terminal 10, from among the stored avatar images, reads avatar image data that corresponds to the avatar ID included in the received designation data, and displays an avatar image. On the other hand, when displaying a captured image on the send destination mobile communications terminal 10, the control apparatus 30 instructs to send captured image data and the message to the send source mobile communications terminal 10.

### (4) Modified Example 4

In the above exemplary embodiment, communication is performed with a videophone call, i.e., with an image and a voice message, but communication may also be performed using, for example, text (a text message) instead of a voice message, in the manner of so-called chat or the like. Also, in such a case, when an avatar displayed in the virtual space has moved to the above-described specific area, the avatar image displayed in the virtual area may be switched with a captured image. Also, the number of mobile communications terminals 10 that send and receive images and messages is not limited to two, and may be three or more.

### (5) Other Modified Examples

The substituted image may be any image that becomes a substitute captured image, and is not limited to the avatar image described by way of example in the exemplary embodiment.

In the exemplary embodiment, when switching from a captured image to an avatar image, or switching from an avatar image to a captured image, switching is performed after confirming with the user of the mobile communications terminal 10 whether switching images is acceptable. This confirmation is not absolutely necessary, and a configuration may be adopted in which when a condition for switching images has been satisfied, images are immediately switched.

Also, in the exemplary embodiment, a configuration is adopted in which a videophone call is started by searching for the other party to a call in the virtual space supplied by the control apparatus 30, but this is not absolutely necessary. A configuration may be adopted in which a videophone call with the other party to the call is started by supplying a user with the telephone number of the user that will be the other party, a user ID used instead of the telephone number, or the like by some method, and the user placing a call using that telephone number, user ID, or the like.

In the above-described exemplary embodiment, the mobile communications terminal 10 is a portable telephone, but the mobile communications terminal 10 may also be another communications terminal. For example, the mobile communications terminal 10 may be a portable communications terminal such as a PDA (Personal Digital Assistant), or a fixed telephone, or a computer apparatus such as a personal computer. Also, when the communications terminal does not use the mobile communications network, another network such as the Internet may be used instead of the mobile communications network. Also, the capture unit is not required to be built into the communications terminal; a configuration may be adopted in which captured image data is supplied from an externally attached video camera. This is also true for a microphone or a speaker.

Also, data that indicates a telephone number is included in the data that the mobile communications terminal 10A sends in Step Sa1, but it is not necessary that this data is a telephone number; the data may be any information that can uniquely specify the communications source mobile communications terminal 10. In this case, the control apparatus 30 may inquire to the service control station based on such information to acquire the telephone number.

The functions of the control apparatus 30 may be distributed and possessed by multiple apparatuses. In other words, the invention may also provide a mobile communications system that includes a receiving apparatus that, from either one of a first communications terminal and a second communications terminal that send and receive images and messages and display images, receives a notification that indicates that a person other than a speaker of the one communications terminal was detected, and a control apparatus that, when the receiving apparatus has not received notification, displays a captured image, sent as an image obtained by capturing from the other of the first communications terminal and the second communications terminal, on the one communications terminal, and when the receiving apparatus has received notification, displays a substitute image instead of a captured image on the one communications terminal.

Also, the control apparatus 30 is a separate apparatus from the node apparatuses (such as the service control station or exchange station) of the mobile communications network, but this control apparatus 30 may also be built into any node apparatus of the mobile communications network.

Also, the functions realized by the control apparatus can also be provided as a program alone. That is, the functions can be provided in a form in which the program is recorded to a recording medium, or can be provided by downloading the program from another control apparatus 30 via a network such as the Internet.

## Claims

1. A control apparatus comprising:
a receiving unit that, from one of a first communications terminal and a second communications terminal, each of the communications terminals being capable of sending and receiving images and messages and of displaying messages and images, receives a notification indicating detection of an outside party who is not a communicant with either of the communications terminals; and
a control unit that, when the receiving unit does not receive the notification from the first communications terminal, causes the first communications terminal to display a captured image sent by the second communications terminal, and when the receiving unit receives the notification from the first communications terminal, causes the first communications terminal to display a substitute image for display in place of the captured image.

2. The control apparatus according to claim 1, wherein:
each of the first communications terminal and the second communications terminal stores the substitute image; and
the control unit, when displaying a captured image on the first communications terminal, causes the second communications terminal to send a captured image obtained by the second communications terminal together with a message to the first communications terminal, or when displaying a substitute image on the first communications terminal, causes the second communications terminal to send the substitute image stored in the second communications terminal together with a message to the first communications terminal.

3. The control apparatus according to claim 1, wherein:
each of the first communications terminal and the second communications terminal stores a plurality of substitute images for display in place of a captured image; and
the control unit, when displaying a captured image on the first communications terminal, causes the second communications terminal to send a captured image obtained by the second communications terminal together with a message, or when displaying a substitute image on the first communications terminal, the control unit notifies the first communications terminal of a substitute image designated by the second communications terminal, and then causes the first communications terminal to display the notified substitute image.

4. The control apparatus according to claim 1, further comprising a storage unit that stores the substitute image,
wherein the control unit, when displaying a captured image on the first communications terminal, causes the second communications terminal to send a captured image obtained by the second communications terminal together with a message, or when displaying the substitute image on the first communications terminal, the control unit sends the substitute image stored in the storage unit.

5. The control apparatus according to claim 4, wherein:
the storage unit further stores identifiers of the first communications terminal and second communications terminal and respective substitute images; and
the control unit, when displaying a substitute image on the first communications terminal, extracts from the storage unit a substitute image stored in association with the identifier of the second communications terminal, and sends the extracted substitute image to the first communications terminal.

6. A mobile communications system comprising:
a receiving apparatus that, from one of a first communications terminal and a second communications terminal, each of the communications terminals being capable of sending and receiving images and messages and of displaying messages and images, receives a notification indicating detection of an outside party who is not a communicant with either of the communications terminals; and
a control apparatus that, when the receiving unit does not receive the notification from the first communications terminal, causes the first communications terminal to display a captured image sent by the second communications terminal, and when the receiving unit receives the notification from the first communications terminal, causes the first communications terminal to display a substitute image for display in place of the captured image.

7. A communications terminal comprising:
a capture unit;
a storage unit that stores a substitute image for display in place of a captured image;
a send/receive unit that sends and receives images and messages to and from a correspondent terminal;
a display that displays an image received by the send/receive unit,
a detection unit that detects within a predetermined range of the correspondent terminal an outside party who is not a communicant with the correspondent terminal; and
a send unit that sends to a control apparatus a notification indicating the detection of the outside party.

8. The communications terminal according to claim 7, wherein the detection unit includes at least any one of a heat sensor that detects the outside party who is not a communicant with the correspondent terminal by sensing heat emitted from the outside party, a voice analyzer that analyzes voices to identify voices of person involved in a communication and a voice of the outside party, and an image recognition unit that identifies the outside party based on a captured image.
